(19) Europäisches Patentamt

European Patent Office

Office européen des brevets

(11) **EP 1 054 328 A2**

(12) **EUROPEAN PATENT APPLICATION**

(43) Date of publication:
22.11.2000 Bulletin 2000/47

(51) Int. Cl.[7]: **G06F 17/10**

(21) Application number: **00110443.9**

(22) Date of filing: **16.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **17.05.1999 JP 13534899**

(71) Applicant: **NEC CORPORATION**
**Tokyo (JP)**

(72) Inventor:
**Misu, Katsuya,**
**NEC IC Microcomputer Systems, Ltd.**
**Kawasaki-shi, Kanagawa (JP)**

(74) Representative:
**Glawe, Delfs, Moll & Partner**
**Patentanwälte**
**Postfach 26 01 62**
**80058 München (DE)**

(54) **Digital signal processor**

(57) In DSP, an X memory (3) and a Y memory (4) are respectively connected to data buses (5, 6). The X memory (3) and the Y memory (4) can be accessed parallelly with each other and simultaneously with a sum-of-product calculation performed by a register unit (10) and a sum-of-product unit (11). When a controller (18) determines that data tables A and B to be filtered are both stored in the X memory (3), it allocates an area (4a) into the Y memory (4), and copies the data table B into this area (4a). The controller (18) controls a sum-of-product calculation unit comprising the register unit (10) and the sum-of-product unit (11) to carry out a calculation process (filtering process) of calculating a sum of products of the data table A stored in the X memory (3) and the data table B stored in the Y memory (4). When writing of data into the data table B is performed during a filtering process, the data table B which has been copied into the area (4a) is written back into the X memory (3) upon completion of the filtering process.

FIG. 1

EP 1 054 328 A2

**Description**

BACKGROUND OF THE INVENTION

Field of the Invention

The present invention relates to a technique for performing a sum-of-product process (hereinafter, referred to as a filtering process) between two data tables in a digital signal processor (hereinafter referred to as a DSP).

Description of the Related Art

In general, a DSP has two memories (an X memory and a Y memory) respectively arranged in different areas and connected to independent data buses, and accesses both of the memories in simultaneous with a calculation process.

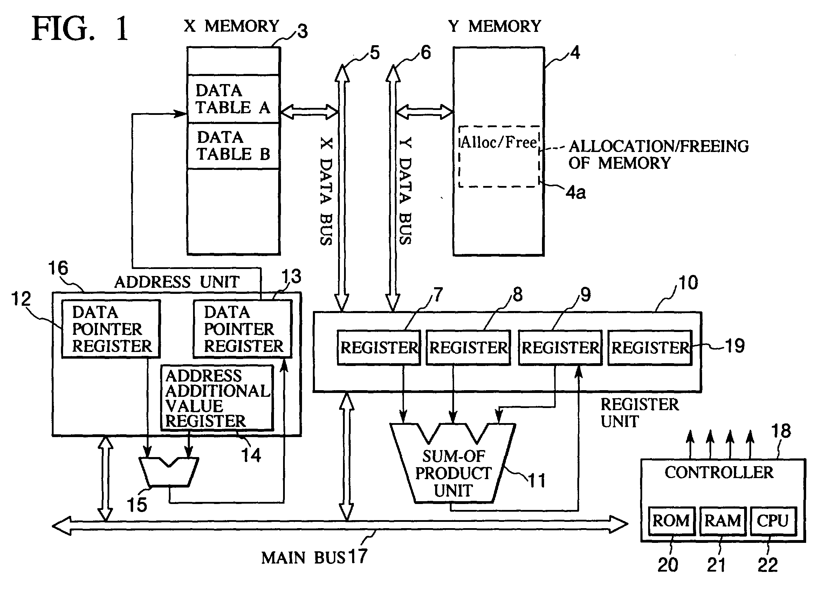

This filtering process is achieved by repeating a sum-of-product calculation. Thus, a generally-known DSP includes a mechanism, in the hardware form, for repeating the sum-of-product calculations or for performing address addition after accessing data. The basic structure of the conventional DSPs is the same as that of a DSP (FIG. 1) described in one embodiment of the present invention, and will specifically be explained in the detailed description of the preferred embodiment of the present invention. Operations of one conventional DSP will hereafter be explained with reference to FIGS. 1, 7 and 8.

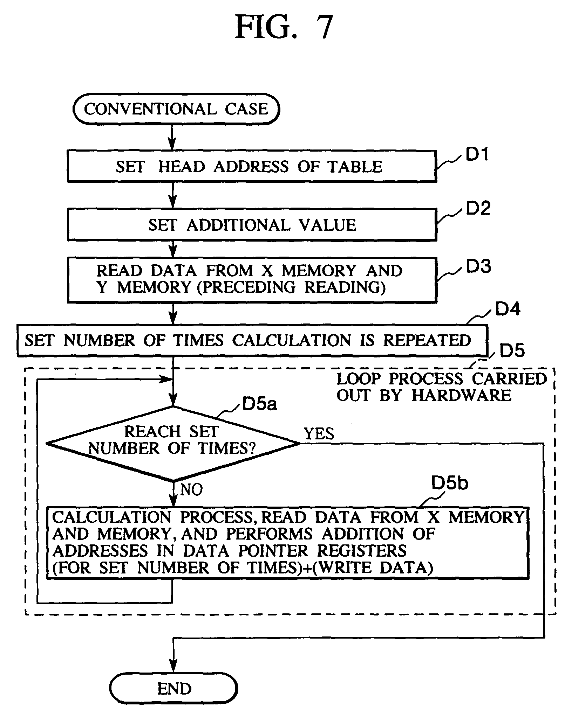

FIG. 7 is a flowchart showing a filtering process to be performed in a conventional DSP. When the process being, the controller 18 sets each head address of two data tables, which are to be filtered, stored in an X memory 3 and/or a Y memory 4, respectively in data pointer registers 12 and 13 (Step D1). When either one of the data tables is accessed in accordance with the set address, the controller 18 sets, in an address additional value register 14, a value to be added to the address, in order to read out following data (Step D2).

The controller 18 reads out the head data respectively from two data tables stored in the X memory 3 and/or the Y memory 4 via an X data bus 5 and/or a Y data bus 6 (Step D3). Then, the controller 18 sets in the register 19 a number of times calculation of a sum of products is repeated during a filtering process (Step D4), and controls a sum-of-product calculation unit (including a sum-of-product unit 11 and a register unit 10) to perform a filtering process using two data tables (Step D5).

During this filtering process in Step D5, until reaching the set number of times (Step D5a), the controller 18 repeats: performing the calculation process of a sum of products; reading the data from the two data tables stored in the X memory 3 and/or Y memory 4; and adding the addresses of the data. The controller 18 performs, if necessary, writing of data into the data tables (Step D5b). When the performing of the calculation process, the reading of the data, the adding of the addresses and the writing of data are repeated the number of times which is set in the register 19 (Step D5a), this filtering process ends.

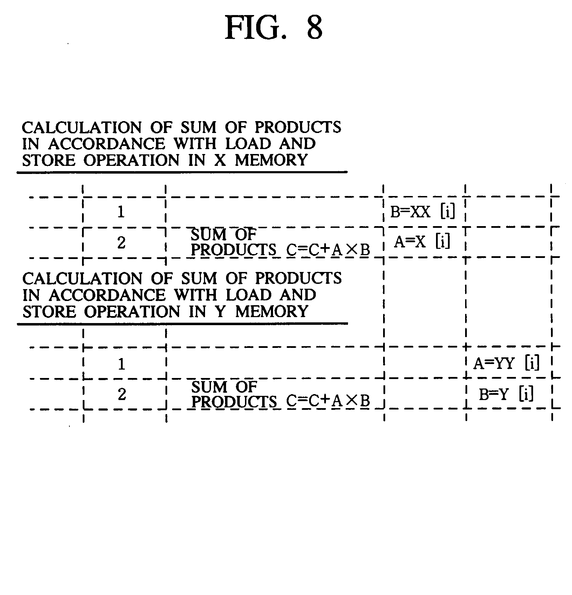

As explained above, when performing the filtering process using the DSP, if two data tables are stored separately from each other in the X memory 3 and Y memory, respectively, writing and reading of data into and from both data tables in Steps D3 and D5b can parallely be performed within one clock cycle. However, the two data tables are stored in either one of the X memory and the Y memory, writing and reading of data into and from the data tables are performed within two clock cycles, as shown in FIG. 8. The larger the scale of the filtering process, the longer the time it takes.

Under such circumstances, in the conventional DSP, data tables to be filtered are arranged in the X memory and the Y memory in advance, respectively, in order to attain a possibly-high-speed filtering process. However, in the case where the data table is arranged in such a manner, an algorithm for the filtering process relies upon distinguishing between the X memory 3 and the Y memory 4. This entails drawback that the data table can not be transferred between the memories without changing the algorithm, and the data table can not flexibly be arranged in the X memory and Y memory.

In recent multimedia processes, the scale of a filtering process itself has become larger and larger, and there is a high tendency that the filtering process is generally employed by a plurality of mechanisms. For example, in a voice compressing process which is so-called CELP (Code Excited Linear Prediction), an encoder includes an algorithm in a decoder in order to perform a prediction process, resulting in that a number of filters are used in common.

Accordingly, a plurality of data tables may, in many cases, be referred in a routine of a dedicated filtering process. In recent years, a plurality of multimedia processes tend to be operated on a real time OS (Operating System). Therefore, there have been more demands that a limited number of memory resources should effectively be used, while dynamically arranging data into the X memory 3 and the Y memory 4.

SUMMARY OF THE INVENTION

It is accordingly an object of the present invention to provide a digital signal processor, a filtering method, and a computer readable recording medium storing the method, wherein a filtering process is performed at speed and data tables to be filtered are flexibly arranged.

According to the first aspect of the present invention, there is provided a digital signal processor, which has two memories (3, 4) capable of being parallelly accessed, and wherein two data tables to be filtered are stored in either one of the two memories (3, 4), the processor comprising:

table determination means (18) for determining whether both of the two data tables are stored in only one of the two memories (3, 4);

area allocation means (18) for allocating an area, when the table determination means determines that the two data tables are stored in only one of the two memories (3, 4), for copying one of the two data tables into other memory of the two memories (3, 4);

first table copying means (18) for copying the one of the two data tables into the area which is allocated by the area allocation means (18); and

filtering process means (10, 11, 15, 16, 18) for performing a filtering process, using the one data table which is copied by the first table copying means (18) and the other data table of the two data tables which are stored only in one of the two memories (3, 4).

In the above-described digital signal processor, when the two data tables to be filtered are stored only in one of the memories, one data table is copied into an area which is allocated in the other memory. Thus, the two data tables to be filtered are respectively stored in the two memories. After this, the filtering process means parallelly can access the two data tables stored in different memories, and can perform a filtering process. This achieves a decrease in the time required for performing a filtering process.

In such a digital signal processor, there is no need to store in advance the two data tables to be filtered in different memories, in order to achieve a high-speed filtering process. Therefore, the data tables to be filtered can flexibly be stored in any one or in both of the two memories.

According to the second aspect of the present invention, there is provided a computer readable recording medium (20) recording a program for controlling a controller to execute:

a writing determination step (Step A8a) of determining whether the writing process of writing data into the data table copied in the area in the filtering process in the filtering process step (Step A4-A8); and

a second table copying step (Step A10) of copying the data table, in which data is written, within the area into an original area in the one of the two memories (3, 4).

Accordingly, if the above-described computer readable recording medium is provided independently from the digital signal processor, the conventionally used digital signal processor can be customized into the digital signal processor of the present invention.

BRIEF DESCRIPTION OF THE DRAWINGS

The object and other objects and advantages of the present invention will become more apparent upon reading of the following detailed description and the accompanying drawings in which:

FIG. 1 is a block diagram showing the structure of a DSP according to an embodiment of the present invention;

FIG. 2 is a flowchart illustrating a filtering process according to the embodiment of the present invention;

FIG. 3 is a flowchart specifically showing a memory allocation process which is included in the filtering process shown in FIG. 2;

FIG. 4 is an explanatory diagram of the memory allocation process;

FIG. 5 is a flowchart specifically showing a memory freeing process which is included in the filtering process shown in FIG. 2;

FIG. 6 is a diagram illustrating the number of clock cycles, during which calculation of a sum of products is performed while parallel load and store operations are processed between two memories according to the embodiment of the present invention;

FIG. 7 is a flowchart illustrating a conventional filtering process; and

FIG. 8 is a diagram illustrating the numbers of clock cycles, during which calculation of a sum of products is processed while a load and store operation is performed in one of memories according to the conventional method.

DETAILED DESCRIPTION OF THE PREFERRED EMBODIMENT

A preferred embodiment of the present invention will now be explained with reference to the attached drawings.

FIG. 1 is a block diagram showing the structure of a DSP according to this embodiment. In the illustration, the DSP has an X memory 3 and a Y memory 4 which are respectively arranged in different areas. The X memory 3 and the Y memory 4 are connected to data buses (i.e., an X data bus 5 and a Y data bus 6), respectively. The X memory 3 and the Y memory 4 can be accessed simultaneously and parallelly with a calculation which is to be performed by a later-described calculation unit.

The X memory 3 stores two data tables A and B respectively within its predetermined areas. Each of the data tables A and B has an "n" number of table elements to be filtered. The "n" number corresponds to a number of times a later-described filtering process is repeated.

The Y memory 4 has an area 4A which is allocated so as to copy the data contents of the other data table, and which is freed therefrom after the filtering process is completed, as will be explained later.

This DSP, as a sum-of-product calculation unit, further includes: a register unit 10 including registers 7 and 8 which hold the data respectively read out from the data tables A and B, a register 9 which holds data representing a previous result of sum-of-product calculation, and a register 19 which sets a number of times calculation of a sum of products is repeated; and a sum-of-product unit 11 which multiplies the data held by the register 7 and the data held by the register 8 together and which adds the resultant multiplication and all those data held by the register 9.

In addition, this DSP has an address unit 16 including data pointer registers 12 and 13 for accessing the X memory 3 and the Y memory 4. Furthermore, this DSP has an address-additional-value register 14 and an address adder 15 for automatically performing address addition after accessing data. In this structure of the DSP, the register unit 10 and the address unit 16 are connected with each other through a main bus 17.

This DSP includes a controller 18 which has a ROM 20, a RAM 21 and a CPU 22. The ROM 20 may be detachably attached to the controller 18, so that it can be replaced by another ROM if necessary. The ROM 20 may be in any other form of a medium, such as a flash memory, etc. from and on which data can arbitrarily be read and written. The CPU 21 executes programs (refer to a later-described flowchart) stored in the ROM 20, while using the RAM 21 as a work area, so that the controller 18 can control each section within the DSP.

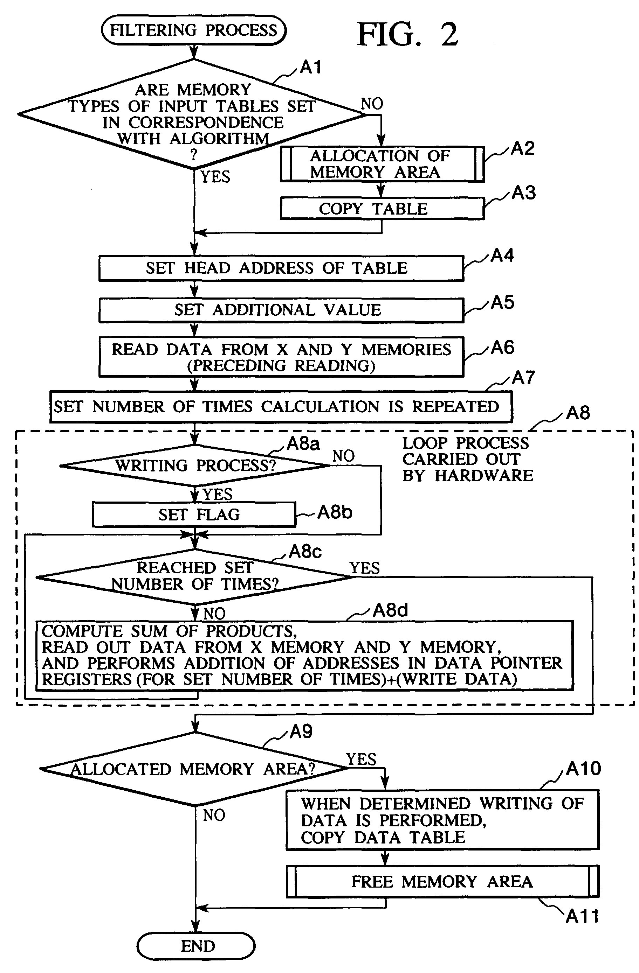

A filtering process to be performed by the DSP according to this embodiment will now be described with reference to the flowchart of FIG. 2. Explanations will exemplarily be made to the case where, of both table tables A and B stored in the X memory 3, the data table B is copied into the predetermined area 4A in the Y memory 4, thereby to perform a filtering process.

The controller 18 determines whether memory types of data tables to be filtered are set in correspondence with an algorithm set in the DSP. In other words, it determines whether two data tables are stored respectively in the X memory 3 and the Y memory 4 (Step A1). In this example, the data tables A and B are both stored in the X memory 3, thus the flow advances to Step A2.

In Step A2, the controller 18 allocates the predetermined area 4A into the Y memory 4 which stores no data table to be filtered. This "memory allocation" process will more specifically be described later. Upon allocation of the area 4A into the Y memory 4, the controller 18 copies, into the area 4A within the Y memory 4, the data table B as one of the data tables stored in the X memory 3 (Step A3).

Then, the controller 18 sets, into the data pointer registers 12 and 13, the head address of the data table A stored in the X memory 3 and the head address of the data table B stored in the area 4A within the Y memory 4, respectively (Step A4). Furthermore, the controller 18 sets into the address-additional-value register 14 values representing addresses necessary for accessing the next data stored within the data tables (Step A5).

In accordance with the addresses respectively stored in the data pointer registers 12 and 13, the controller 18 reads out the head data of the data table A from the X memory 3 via the X data bus 5, and also reads out the head data of the data table B from the Y memory 4 via the Y data bus 6. The controller 18 is capable of reading such data parallelly from the data tables A and B, since both data buses 5 and 6 are separately arranged, and the read data are stored in the registers 7 and 8, respectively. Thereafter, the address adder 15 adds the values respectively stored in the data pointer registers 12 and 13, together with the value stored in the address-additional-value register 14, and writes back the resultant addition into the data pointer register 12 (Step A6).

Further, the controller 18 sets, into the register 19, a number of times calculation of a sum of products is repeated in a filtering process (Step A7). Upon completion of the setting of the number of times, the controller 18 controls the register unit 10, the sum-of-product unit 11, the address unit 16 and the address adder 15 so as to perform a filtering process using the data tables A and B in the circumstances where a loop process is carried out by the hardware (Step A8).

In the filtering process of Step A8, the controller 18 determines whether writing of data is to be performed in the data table B, which has been copied into the area 4A within the Y memory 4, during the filtering process (Step A8a). When determined that the writing of data is to be performed, the controller 19 sets a predetermined writing flag, and the flow advances to Step A8c. On the contrary, when determined that the writing of data is not to be performed, the flow advances to Step A8c without setting a predetermined flag.

Until reaching the number of times which is set in the register 19 (Step A8c), the sum-of-product calculation unit comprising the register unit 10 and the sum-of-product unit 11 carries out a process of computing a sum of products, reads out the data from the X memory 3 and the Y memory 4, performs addition of the addresses stored in the data pointer registers 12 and 13, and if necessary, writes data into the data tables A and B (Step A8d).

In particular, the sum-of-product calculation unit multiplies the data stored in the register 8 with the data stored in the register 7, adds the data stored in the register 9 together with the resultant multiplication, and writes back the result of the addition into the register 9. Reading of data from the X memory 3 and the Y memory 4, and addition of addresses set in the data pointer registers 12 and 13 are processed likewise in Step A6.

If a number of times calculation of a sum of products is performed reaches the number of times, the calculation of a sum of products is to be repeated, which is set in the register 19 (Step A8c), then the controller 18 determines whether allocation of a predetermined area into a memory is achieved in Step A2 (Step A9). In this embodiment, the area 4A has been allocated into the Y memory 4 in order to copy the data table B, thus the flow advances to Step A10.

In Step A10, the controller 18 checks whether writing of data is performed in the data table B which has been copied into the area 4A in Step A8d, in accordance with whether the writing flag is set. In the case whether such writing is performed, the controller 18 copies the data table B which has been copied into the area 4A within the Y memory 4 into a certain area in the X memory 3, in which the data table B has originally been stored.

The controller 18 frees the area 4A, from the Y memory 4, which has been allocated thereinto in Step A2 (Step A11). This "memory freeing" process will more specifically be described later. Then, the flow ends up, and the filtering process using the data tables A and B is terminated.

Unlike the above example, in the case where two data tables to be filtered are stored separately in the X memory 3 and the Y memory 4, the flow advances to Step A4 directly from Step A1. In addition to this, the filtering process is carried out throughout Steps A4 to A8, in the state where such data tables are stored respectively in their original memories. In this case, the memory allocation process is not performed in Step A2, thus once the determination in Step A9 is terminated, the filtering process of this flowchart ends.

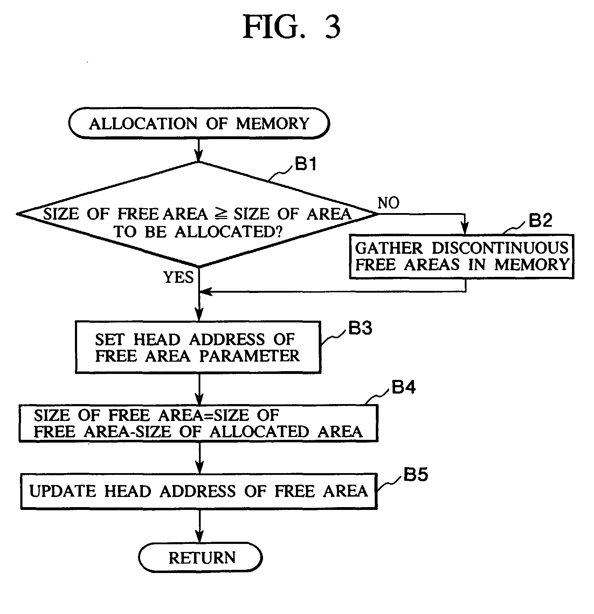

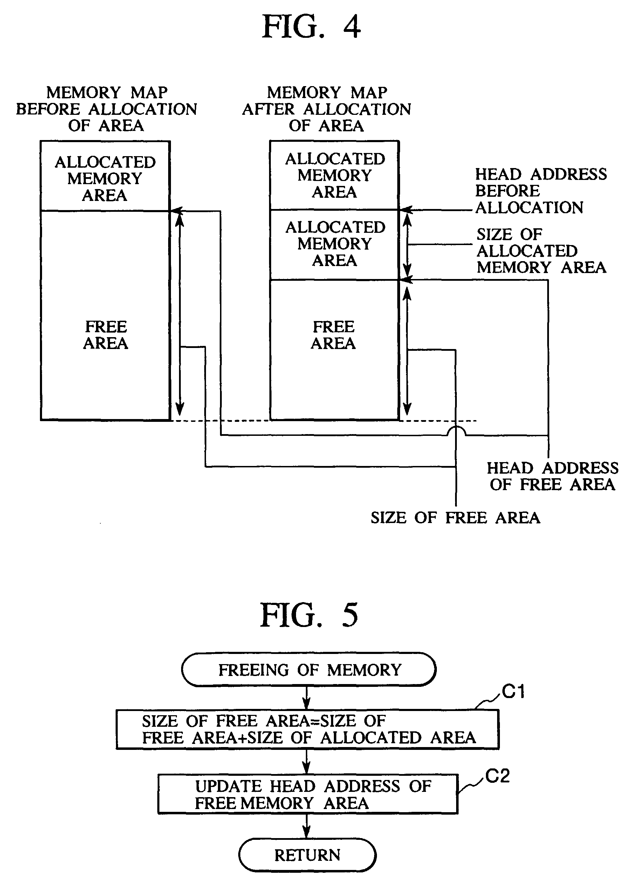

The "memory allocation" process in Step A2 will now specifically be explained with reference to the flowchart illustrated in FIG. 3 and to the explanatory diagram illustrated in FIG. 4. The controller 18 determines whether the size of a continuous area in the Y memory 4 is equal to or larger than the size of the area 4A to be allocated thereinto, i.e., the size of the data table B (Step B1). In the case where the size of the continuous free area is equal to or larger than the size of a to-be-allocated area, the flow advances to Step B3.

On the other hand, in the case where the size of the continuous free area is smaller than the size of the to-be-allocated area, the controller 18 carries out a process of preparing a free area, within the Y memory 4, which is large enough for the data table B. During this process, the controller 18 gathers, for example, discontinuous free areas in the Y memory 4 through a compaction process, or copies into the X memory 3 the data which are stored in the Y memory 4 and which are not necessary for the filtering process (Step B2), and the flow advances to Step B3.

In Step B3, the controller 18 sets, as a parameter to be sent from this subroutine to the main routine, the head address of a free area (the head one of addresses of the free area before being allocated) in the Y Memory 4. That is, the controller 18 sets the head address of the free area as the head address of the area 4A to be allocated into the Y memory 4.

Further, the controller 18 subtracts the size of the allocated area 4A from the size of the free area before being allocated as the area 4A, and sets the resultant subtraction as the size of a new free area in the Y memory 4 (Step B4). Then, the controller 18 updates the head address of the free area in the Y memory 4, and the memory allocation process of this flowchart ends up, returning to the main routine shown in FIG. 2.

The "memory freeing" process of Step A11 will now specifically be described with reference to the flowchart illustrated in FIG. 5. The controller 18 adds the size of the currently-free area in the Y memory 4 with the size of the area 4A which has been allocated in Step A2, and sets the resultant addition as the size of the free area of the Y memory 4 (Step D1). Thereafter, the controller 18 updates the head address of the free area of the Y memory 4 (Step D2), and the memory freeing process of this flowchart ends, returning to the main routine shown in FIG. 2.

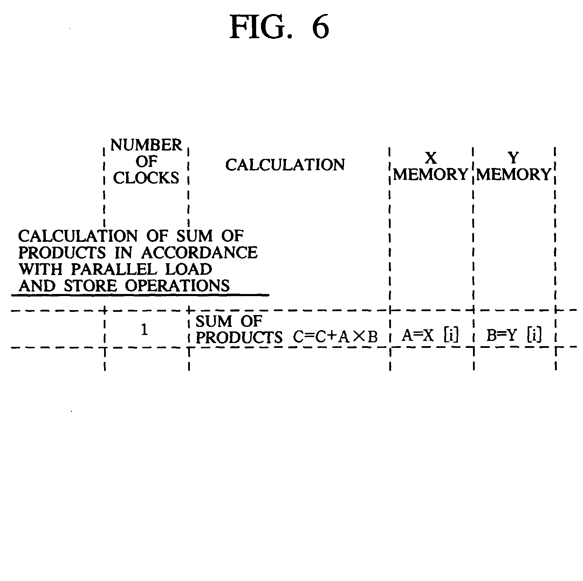

As explained, the DSP according to this embodiment, in the case where both data tables A and B to be filtered are stored in the X memory 3, the data table B, for example, is copied in the area 4A in the Y memory 4, thereafter to perform the filtering process. Thus, in Step A6 or Step A8d, the procedure of reading the data stored in the data table A from the X memory 3 and the procedure of reading the data stored in the data table B from the Y memory 4 can parallelly be performed. Hence, only one clock cycle is necessary for reading such data, as shown in FIG. 6.

Copying a data table can increase the period of time necessary for the filtering process. However, in the case where, for example, the number of elements forming the data table is set 80 and where the number of times calculation is performed is 240, the speed performance of the DSP according to this embodiment is improved as follows, as compared to the case where the filtering process is performed in the state of two data tables being stored in the same memory:

(1) In the case of only reading data from a data table

$$\{(240 \times 2) - (80 + 249)\} / (240 \times 2) \approx 33\%$$

(2) In the case of writing data into a data table

$$\{(240 \times 2) - (80 \times 2 + 249)\} / (240 \times 2) \approx 17\%$$

Thus, the DSP according to this embodiment can execute the filtering process at speed using two data tables. Besides, the larger the data to be calculated which are stored in the data tables, the more remarkable the resultant speed is. In the case where two data tables to be filtered are originally separated from each other respectively in the X memory 3 and the Y memory 4, the filtering process can be performed at a high speed likewise in the conventional case.

Moreover, in the DSP according to this embodiment, even if two data tables to be filtered are not separated from each other respectively in the X memory 3 and the Y memory 4 in advance, the time required for the filtering process can sufficiently be reduced. Thus, the data tables can flexibly be arranged in the X memory 3 and the U memory 4, without any consideration of the arrangement of such data tables in the memories.

In the above-described embodiment, of the data tables A and B stored in the X memory 3, the data table B is copied in the area 4A which has been allocated into the Y memory 4, thereby to perform the filtering process. Similarly, of two data tables stored in the Y memory 4, one of them may be copied in an area which will have been allocated into the X memory 3, thereby to perform the filtering process.

In the above-described embodiment, the determination, of whether writing of data is performed in the data table B which has been copied at the beginning of the loop process to be carried out by the hardware (Step A8), is made. When determined that the writing is performed, a writing flag is set (Step A8b). It should be noted that the writing flag may also be set, when writing of data is performed in the data table B in Step A8d, without going through the procedure of Step A8b. The determination of whether the writing of data into the data table B may be performed in any other step prior to Step A10.

In the above-described embodiment, the CPU 22 executes the program stored in the ROM 20, so that the controller 18 can control each section with the DSP and also perform the filtering process. Such a ROM 20 storing the programs be distributed and sold separately from the DSP. Furthermore, the programs which the CPU 22 included in the controller 18 executes may be stored on a recording medium, which is readable by computers, such a medium other than the ROM chip as a magnetic disk or an optical disk, and may be distributed, sold and load in a memory (e.g., flash memory) of the controller 18. Replacing the ROM 20 with any other recording medium or reloading the programs into the memory within the controller 18 enables the conventionally-utilized DSP to be customized into the DSP of the present invention.

Various embodiments and changes may be made thereonto without departing from the broad spirit and scope of the invention. The above-described embodiment is intended to illustrate the present invention, not to limit the scope of the present invention. The scope of the present invention is shown by the attached claims rather than the embodiment. Various modifications made within the meaning of an equivalent of the claims of the invention and within the claims are to be regarded to be in the scope of the present invention.

This application is based on Japanese Patent Application No. H11-135348 filed on May 17, 1999, and including specification, claims, drawings and summary. The disclosure of the above Japanese Patent Application is incorporated herein by reference in its entirety.

**Claims**

1. A digital signal processor, which has two memories (3, 4) capable of being parallelly accessed, and wherein two data tables to be filtered are stored in either one of the two memories (3, 4), said processor comprising:

   table determination means (18) for determining whether both of the two data tables are stored in only one of the two memories (3, 4);
   area allocation means (18) for allocating an area, when said table determination means determines that the two data tables are stored in only one of the two memories (3, 4), for copying one of the two data tables into other memory of the two memories (3, 4);
   first table copying means (18) for copying the one of the two data tables into the area which is allocated by the area allocation means (18); and
   filtering process means (10, 11, 15, 16, 18) for performing a filtering process, using the one data table which is copied by said first table copying means (18) and the other data table of the two data tables which are stored only in one of the two memories (3, 4).

2. The digital signal processor according to claim 1, further comprising memory freeing means (18) for freeing the allocated area, after the filtering process performed by said filtering process means (10, 11, 15, 16, 18), when the area is allocated into the other one of the two memories (3, 4) by said area allocation means (18).

3. The digital signal processor according to claim 1, further comprising:

   writing determination means (18) for determining whether, in the filtering process performed by said filtering process means (10, 11, 15, 16, 18), a writing process of writing data into the data table which is copied into the area is performed; and
   second copying means (18) for copying the data table which is copied in the area and in which data is written, into an original area within the one of the two memories (3, 4).

4. The digital signal processor according to claim 1, wherein said filtering process means (10, 11, 15, 16, 18) performs a filtering process using each of the data tables stored in the memories, when said table determination mans (18) determines that the two data tables are stored respectively in the two memories (3, 4).

5. A digital signal processor, comprising:

two memories (3, 4) which can parallelly be accessed and either one of which stores two data tables to be filtered;
a filtering processor (10, 11) which is connected to said two memories (3, 4) respectively via buses (5, 6) and which performs a filtering process of data included in the two data tables;
an address supplier (15, 16) which sequentially supplies an address for reading and writing data from and into the two memories (3, 4); and
a controller (18) which controls said filtering processor (10, 11) and said address supplier (15, 16), and
wherein said controller (18)

allocates, when it is determined that both of the two data tables are stored only in one of the two memories (3, 4), into other one of the two memories (3, 4) an area for copying one of the two data tables,
copies the one of the two data tables into the allocated area, and
controls said address supplier (15, 16) to sequentially supply addresses of the one copied data table and of other one of the two data tables which is stored in the one of the two memories (3, 4), and controls said filtering processor (10, 11) to perform a filtering process.

6. The digital signal processor according to claim 5, wherein said controller (18) frees the allocated area upon completion of the filtering process, when the area is allocated into the other one of the two memories (3, 4).

7. The digital signal processor according to claim 5, wherein:

said controller (18) determines whether a writing process of writing data into a data table, which is copied into the area in the filtering process, is performed; and
said controller (18) controls, when determined that the writing process of writing data into the copied data table, the data table in which data is written within the area to be copied into an original area of the one of the two memories (3, 4).

8. A filtering process method in a digital signal processor, which has two memories (3, 4) capable of being parallelly accessed and a filter processor (10, 11) performing a filtering process of data included in two data tables to be filtered, and wherein the two data tables can be stored in any of the two memories (3, 4), and said method comprising:

determining whether both of the two data tables are stored only in one of the two memories (3, 4);
allocating, when determined that both of the two data tables are stored only in one of the two memories (3, 4), an area for copying one of the two data tables into other one of the two memories (3, 4);
copying the one of the two data tables into the allocated area;
controlling said filtering processor (10, 11) to perform a filtering process using the copied data table and other one of the two data tables which is stored in the one of the two memories (3, 4).

9. The filtering process method according to claim 8, further comprising freeing an allocated area upon completion of the filtering process, when the area is allocated in the other one of the two memories (3, 4).

10. The filtering process method according to claim 8, further comprising:

determining whether a writing process of writing data into the data table, which is copied in the area, is performed in the filtering process; and
copying the data table, in which data is written, within the area into an original area inside the one of the two memories (3, 4), when determined that the writing process of writing data into the copied data table.

11. A computer readable recording medium (20) which stores programs for controlling a digital signal processor, which has two memories (3, 4) capable of being parallelly accessed and a filtering processor (10, 11) for performing a filtering process of data included in two data tables to be filtered, and wherein the two data tables can be stored any of the two data tables, and said medium (20) storing a program for controlling the computer of said digital signal processor to execute:

a table determination step (Step A1) of determining whether both of the two data tables are stored only in one of the two memories (3, 4);

an area allocation step (Step A2) of allocating an area for copying, when determines that both of the two data tables are stored only in one of the two memories (3, 4) in said table determination step (Step A1), one of the two data tables into other one of the two memories;

a first table copying step (Step A3) of copying one of the two data tables into the area allocated in said area allocation step (Step A2); and

a filtering processing step (Step A4-A8) of controlling said filtering processor (10, 11) to perform a filtering process using the one of the two data tables which is copied in said first table copying step (Step A3) and other one of the two data tables which is stored in the one of the two memories (3, 4).

12. The computer readable recording medium (20) according to claim 11, wherein said filtering processing step (Step A4-A8) includes:

a step (Step A4-A7) of controlling an address unit (16), included in said digital signal processor, to sequentially output an address for accessing the two data tables; and

a step of controlling said filtering processor (10, 11) to perform a filtering process, based on data which is read out from the two data tables in accordance wit the address sequentially output from the address unit (16).

13. The computer readable recording medium (20) according to claim 11, further recording a program for controlling the controller to execute

a memory freeing step (Step A11) of freeing the allocated area after the filtering process is completed in said filtering process step (Step A4-A8), when the area for the data table is allocated into the other one of the two memories (3, 4) in said area allocation step (Step A2)

14. The computer readable recording medium (20) according to claim 11, further recording a program for controlling the controller to execute:

a writing determination step (Step A8a) of determining whether the writing process of writing data into the data table copied in the area in the filtering process in said filtering process step (Step A4-A8); and

a second table copying step (Step A10) of copying the data table, in which data is written, within the area into an original area in the one of the two memories (3, 4).

# FIG. 1

X MEMORY 3

Y MEMORY 4

DATA TABLE A

DATA TABLE B

Alloc/Free —--- ALLOCATION/FREEING OF MEMORY

4a

X DATA BUS 5

Y DATA BUS 6

ADDRESS UNIT

16 DATA POINTER REGISTER 12

DATA POINTER REGISTER 13

ADDRESS ADDITIONAL VALUE REGISTER 14

15

REGISTER 7

REGISTER 8

REGISTER 9

REGISTER 10

19

REGISTER UNIT

SUM-OF PRODUCT UNIT 11

CONTROLLER 18

ROM 20

RAM 21

CPU 22

MAIN BUS 17

EP 1 054 328 A2

# FIG. 2

(FILTERING PROCESS)

**A1**
ARE MEMORY TYPES OF INPUT TABLES SET IN CORRESPONDENCE WITH ALGORITHM ?

NO →

**A2** ALLOCATION OF MEMORY AREA

**A3** COPY TABLE

YES

**A4** SET HEAD ADDRESS OF TABLE

**A5** SET ADDITIONAL VALUE

**A6** READ DATA FROM X AND Y MEMORIES (PRECEDING READING)

**A7** SET NUMBER OF TIMES CALCULATION IS REPEATED

**A8** LOOP PROCESS CARRIED OUT BY HARDWARE

**A8a** WRITING PROCESS? — NO

YES

**A8b** SET FLAG

**A8c** REACHED SET NUMBER OF TIMES? — YES

NO

**A8d** COMPUTE SUM OF PRODUCTS, READ OUT DATA FROM X MEMORY AND Y MEMORY, AND PERFORMS ADDITION OF ADDRESSES IN DATA POINTER REGISTERS (FOR SET NUMBER OF TIMES)+(WRITE DATA)

**A9** ALLOCATED MEMORY AREA? — YES →

NO

**A10** WHEN DETERMINED WRITING OF DATA IS PERFORMED, COPY DATA TABLE

**A11** FREE MEMORY AREA

(END)

# FIG. 3

ALLOCATION OF MEMORY

B1

SIZE OF FREE AREA ≧ SIZE OF AREA TO BE ALLOCATED?

NO

B2

GATHER DISCONTINUOUS FREE AREAS IN MEMORY

YES

B3

SET HEAD ADDRESS OF FREE AREA PARAMETER

B4

SIZE OF FREE AREA=SIZE OF FREE AREA-SIZE OF ALLOCATED AREA

B5

UPDATE HEAD ADDRESS OF FREE AREA

RETURN

# FIG. 4

MEMORY MAP
BEFORE ALLOCATION
OF AREA

MEMORY MAP
AFTER ALLOCATION
OF AREA

ALLOCATED
MEMORY
AREA

FREE
AREA

ALLOCATED
MEMORY
AREA

ALLOCATED
MEMORY
AREA

FREE
AREA

HEAD ADDRESS
BEFORE
ALLOCATION

SIZE OF
ALLOCATED
MEMORY AREA

HEAD ADDRESS
OF FREE AREA

SIZE OF FREE AREA

# FIG. 5

FREEING OF MEMORY

SIZE OF FREE AREA=SIZE OF
FREE AREA+SIZE OF ALLOCATED AREA  ⟋C1

UPDATE HEAD ADDRESS OF
FREE MEMORY AREA  ⟋C2

RETURN

# FIG. 6

| NUMBER OF CLOCKS | CALCULATION | X MEMORY | Y MEMORY |
|---|---|---|---|
| CALCULATION OF SUM OF PRODUCTS IN ACCORDANCE WITH PARALLEL LOAD AND STORE OPERATIONS | | | |
| 1 | SUM OF PRODUCTS $C=C+A\times B$ | $A=X\ [i]$ | $B=Y\ [i]$ |

# FIG. 7

```
        ┌─────────────────────────────┐
        │    CONVENTIONAL CASE         │
        └─────────────────────────────┘
                    │
                    ▼
    ┌──────────────────────────────────────┐   D1
    │    SET  HEAD  ADDRESS  OF  TABLE      │
    └──────────────────────────────────────┘
                    │
                    ▼
    ┌──────────────────────────────────────┐   D2
    │       SET  ADDITIONAL  VALUE          │
    └──────────────────────────────────────┘
                    │
                    ▼
    ┌──────────────────────────────────────┐   D3
    │  READ DATA FROM X MEMORY AND          │
    │  Y MEMORY (PRECEDING READING)         │
    └──────────────────────────────────────┘
                    │                              D4
                    ▼
┌────────────────────────────────────────────────┐
│ SET NUMBER OF TIMES CALCULATION IS REPEATED     │   D5
└────────────────────────────────────────────────┘
```

LOOP PROCESS CARRIED OUT BY HARDWARE

D5a — REACH SET NUMBER OF TIMES? — YES

NO

D5b — CALCULATION PROCESS, READ DATA FROM X MEMORY AND MEMORY, AND PERFORMS ADDITION OF ADDRESSES IN DATA POINTER REGISTERS (FOR SET NUMBER OF TIMES)+(WRITE DATA)

```
        ┌─────────────────────────────┐
        │            END              │
        └─────────────────────────────┘
```

# FIG. 8

CALCULATION OF SUM OF PRODUCTS
IN ACCORDANCE WITH LOAD AND
STORE OPERATION IN X MEMORY

| | | | | |
|---|---|---|---|---|
| 1 | | B=XX [i] | | |
| 2 | SUM OF PRODUCTS C=C+A×B | A=X [i] | | |

CALCULATION OF SUM OF PRODUCTS
IN ACCORDANCE WITH LOAD AND
STORE OPERATION IN Y MEMORY

| | | | | |
|---|---|---|---|---|
| 1 | | | A=YY [i] | |
| 2 | SUM OF PRODUCTS C=C+A×B | | B=Y [i] | |